# DEMANDE DE BREVET EUROPEEN

(11) **EP 0 953 295 A1**
(43) Date de publication de la demande: **03.11.1999**
(21) Numéro de dépôt: 99401018.9
(22) Date de dépôt: 26.04.1999
(51) Int. Cl.: A23L 1/236, A23G 3/30

(54) **Composition édulcorante et produits alimentaires la contenant**

(30) Priorité: 29.04.1998 FR 9805390
(71) Demandeur: Roquette Frères, 62136 Lestrem (FR)
(72) Inventeur: Ribadeau-Dumas, Guillaume, 59237 Verlinghem (FR); Fouache, Catherine, 62113 Sailly Labourse (FR); Duflot, Pierrick, 62136 La Couture (FR)
(74) Mandataire: Boulinguiez, Didier

(57) **Abrégé**

L'invention a pour objet une composition édulcorante utilisable dans les produits alimentaires et notamment dans les articles de confiserie tels que les fondants, les fourrages, les bonbons gélifiés, les gommes, les fruits confits et les chewing-gums. Elle est caractérisée par le fait qu'elle comprend de 5 à 100% en poids d'iditol par rapport à la matière sèche totale.

Elle a également pour objet les produits alimentaires, en particulier les chewing-gums, contenant ladite composition.

## Description

L'invention a pour objet une composition édulcorante utilisable dans les produits alimentaires et notamment dans les articles de confiserie tels que les fondants, les fourrages, les bonbons gélifiés, les gommes, les fruits confits et les chewing-gums.

Elle concerne également les produits alimentaires, en particulier les chewing-gums, contenant ladite composition.

Il est connu que les chewing-gums traditionnels, qui comportent du saccharose et du sirop de glucose, et les chewing-gums sans sucre , qui sont à base de polyols, sont essentiellement constitués d'environ :
- 15 à 30% de gomme de base,
- 50 à 70% d'hydrates de carbone sous forme pulvérulente,
- 0 à 25% de sirops d'hydrates de carbone constituant la fraction liquide du chewing-gum,
- 1 à 2% d'arômes,
- 0 à 5% d'autres ingrédients du groupe comprenant les antioxydants, les colorants, les édulcorants intenses, les agents de charge et les émulsifiants,
le terme hydrate de carbone désignant :
- d'une part, les glucides tels que les mono-, di, oligo- et polysaccharides, et leurs mélanges tels que les hydrolysats d'amidon, et
- d'autre part, les polyols ou sucres-alcools tels que les mono-, di-, oligo- et polysaccharides hydrogénés et leurs mélanges, dont notamment les hydrolysats d'amidon hydrogénés ou HAH.

Les hydrolysats d'amidon sont obtenus de manière en elle-même connue par hydrolyse enzymatique et/ou acide de lait d'amidon. Leur traitement par hydrogénation catalytique sous haute pression et haute température à l'aide de nickel de Raney permet d'obtenir les produits correspondants hydrogénés.

Dans un chewing-gum traditionnel, l'hydrate de carbone pulvérulent et le sirop d'hydrate de carbone sont constitués en général respectivement par le saccharose et un sirop dit " de glucose" ou hydrolysat d'amidon, tandis que dans le chewing-gum "sans sucre" à base de polyols, les hydrates de carbone pulvérulents et les sirops d'hydrates de carbone sont constitués en général respectivement par du maltitol, du xylitol, du mannitol, du lactitol, de l'isomalt, de l'érythritol et/ou du sorbitol poudre pour les premiers et par un sirop de polyols pour les seconds.

On connaît ainsi des chewing-gums sans sucre qui contiennent comme phase liquide des solutions aqueuses de sorbitol. Ces types de chewing-gums ont particulièrement tendance à perdre de l'eau et à sécher. Ils deviennent alors durs, cassants et granuleux et sont de ce fait pratiquement impropres à la consommation. Ce phénomène de perte en eau s'explique par la cristallisation du sorbitol initialement présent en solution, ce qui a pour conséquence une augmentation de la quantité d'eau libre, donc de la valeur d'Humidité Relative à l'Equilibre (HRE) desdits chewing-gums.

Il a donc été proposé, en particulier dans les documents EP-A-0.082.670 et EP-A-0.325.090, d'utiliser la glycérine comme composé plastifiant et liant dans les chewing-gums sans sucre .

Les sirops ainsi obtenus sont connus comme étant particulièrement hygroscopiques et ont ainsi tendance à absorber l'eau présente dans l'atmosphère dans laquelle ils sont stockés. Il en résulte qu'au bout d'un certain temps, ils deviennent collants et perdent leurs caractéristiques de structure et de texture qui les rendaient attractifs pour le consommateur. Ce phénomène peut être partiellement supprimé en conditionnant les chewing-gums dans des emballages étanches mais coûteux. Cette propension à la reprise en eau de ces chewing-gums sans sucre est liée à une valeur d'Humidité Relative à l'Equilibre (HRE) relativement faible.

Pour remédier à cet inconvénient, l'emploi des sirops d'hydrolysats d'amidon hydrogénés s'est progressivement imposé au détriment de celui des sirops de sorbitol ou de glycérine. Les HAH ont en effet des meilleures propriétés plastifiantes, liantes et anticristallisantes. Ils ont également pour avantage de limiter fortement les variations de l'HRE au sein des chewing-gums.

Mais il s'est avéré que ces sirops à base d'HAH ne sont pas dépourvus d'inconvénients lorsqu'ils sont mis en oeuvre dans les chewing-gums. En effet, leur teneur en eau n'est pas négligeable puisqu'elle représente le plus souvent environ 15 à 20% en poids. Ils enrichissent donc en eau les chewing-gums dans lesquels ils sont employés. Le milieu humide ainsi créé est tout à fait contre-indiqué à l'utilisation d'édulcorants intenses de synthèse tels que l'aspartame qui est un dipeptide constitué d'un ester méthylique de L-aspartyl-L-phénylalanine.

On sait en effet que la stabilité de l'aspartame dans des produits alimentaires est liée à la quantité d'eau présente dans le milieu ainsi qu'à la valeur d'HRE, au temps de contact, à la température et au pH. Et dans des milieux à HRE élevée, l'aspartame se décompose spontanément en dicétopipérazine, ce qui entraîne inévitablement une perte en effet sucrant. De plus, ce produit de dégradation est connu pour sa saveur amère désagréable.

Une autre conséquence résultant de l'emploi des sirops d'HAH riches en eau est l'obtention d'un chewing-gum à texture très souple et collante, entraînant des problèmes au moment de la fabrication car un tel chewing-gum est peu commode à manipuler et à mettre en forme, du fait de sa tendance à adhérer à tous les équipements de fabrication. En outre, et pour les mêmes raisons que celles mentionnées ci-dessus, il n'est généralement pas apprécié par le consommateur.

Enfin, l'eau en excès dans les chewing-gums peut favoriser la solubilisation de certains arômes qui sont alors beaucoup plus sensibles à l'oxydation et, par voie de conséquence, s'altèrent plus facilement.

Pour remédier à ces inconvénients, il s'agissait donc de diminuer la teneur en eau des chewing-gums sans sucre et plus précisément de la fraction liquide plastifiante et liante de ceux-ci.

Or, les sirops d'HAH qui constituent préférentiellement ladite fraction liquide plastifiante et liante, ne peuvent pas être concentrés sans difficultés au-dessus d'une teneur en matière sèche de l'ordre de 88%. En effet, lorsque l'on évapore l'eau contenue dans de tels sirops, ils deviennent extrêmement visqueux. Dans ces conditions, les évaporateurs traditionnels ne conviennent plus. Il est nécessaire d'avoir recours à des équipements plus sophistiqués, et donc très coûteux.

En outre, même si l'on parvient à la teneur réduite en eau souhaitée, la viscosité élevée subséquente de ces sirops d'hydrolysats implique qu'ils ne sont manipulables qu'à haute température. Or, on imagine aisément les problèmes que peut engendrer sur le plan industriel, le travail d'une masse chaude devant être incorporée dans une formulation de chewing-gum.

Par ailleurs, ces sirops concentrés doivent être maintenus en permanence au-dessus de leur température de solidification, faute de quoi ils se vitrifieraient en un bloc dur et résistant qu'il serait malaisé de refondre en vue d'un recyclage. Pour éviter une dégradation par la chaleur, ces sirops maintenus fluides doivent impérativement être utilisés rapidement.

Enfin, la mise en contact de ces sirops avec des produits sensibles à la chaleur, lors de la préparation de chewing-gums, peut entraîner soit la dégradation de ceux-ci comme c'est le cas pour l'aspartame, soit leur volatilisation lorsqu'il s'agit d'arômes.

Il est clair que de telles contraintes ne répondent pas aux exigences industrielles de rentabilité économique et de qualité du produit fini.

Il a donc été proposé, par exemple dans les documents US-A-4.671.967, EP-A-0.196.640 et EP-A-0.323.442, d'avoir recours, pour 1a préparation de produits alimentaires tels que les chewing-gums, à des compositions plastifiantes et liantes perfectionnées à base de sirops d'hydrolysats d'amidon et de glycérine ou de propylène-glycol.

En effet, la glycérine et le propylène-glycol abaissent la viscosité des sirops d'hydrolysats d'amidon et facilitent l'évaporation de l'eau que ces derniers contiennent, même lorsque l'on emploie des évaporateurs traditionnels. Le comportement rhéologique de ces mélanges comprenant des sirops d'hydrates de carbone et de la glycérine ou du propylène-glycol est relativement satisfaisant et les compositions plastifiantes concentrées ainsi obtenues sont manipulables même à température ambiante.

Elles présentent néanmoins l'inconvénient d'avoir une HRE relativement basse et favorisent donc le phénomène de reprise en eau dans des chewing-gums auxquels ils sont incorporés. Cette faible valeur d'HRE est en partie liée à l'élimination d'eau. La glycérine ou le propylène-glycol, ajouté à ces sirops, non seulement ne compense pas cette perte en eau mais, au contraire , ne fait qu'entraîner la valeur d'HRE à la baisse.

De plus, la glycérine développe, par ailleurs, lors de sa consommation, un effet de dégagement de chaleur communément désigné dans le métier par l'expression de langue anglaise " heating effect", et qui est tout à fait déplaisant pour le consommateur.

L'invention a pour but de pallier les limites et/ou les inconvénients des compositions de l'art antérieur et de proposer une composition édulcorante répondant mieux que celles qui existent déjà, aux diverses exigences de la pratique, c'est-à-dire :
- possédant des propriétés plastifiantes, liantes et anticristallisantes,
- utilisable dans les produits alimentaires, notamment dans les chewing-gums et, en particulier, dans les chewing-gums sans sucre ,
- n'apportant qu'une quantité mineure d'eau au produit alimentaire auquel elle est destinée à être ajoutée,
- présentant des propriétés rhéologiques telles quelle soit commode à manipuler même à température ambiante,
- étant de préparation aisée,
- stable en elle-même et apte à conférer aux produits alimentaires auxquels elle est destinée à être incorporée, une stabilité suffisante à la conservation, notamment en rapport avec la reprise en eau qui conduit à une dégradation de la qualité de ces produits, en particulier des chewing-gums sans sucre , et en rapport avec le phénomène de cristallisation qui conduit à une augmentation de la dureté desdits produits.
- présentant un pouvoir sucrant important sans "heating effect" permettant de diminuer l'ajout d'édulcorant intense de synthèse.

Et la Société Demanderesse a eu le mérite de trouver, à l'issue de recherches approfondies, que ce but pouvait être atteint par une composition édulcorante pour produits alimentaires comprenant de l'iditol.

L'iditol est un polyol obtenu industriellement par hydrogénation du sorbose. Il présente un intérêt potentiel important en raison du fait qu'il est plus stable chimiquement que le saccharose, tout en possédant avantageusement un pouvoir sucrant très voisin de celui de ce sucre. De plus, l'iditol possède la particularité de n'être pas cariogène, ce qui lui ouvre de multiples applications dans l'industrie, notamment dans les industries alimentaires et pharmaceutiques.

Par conséquent, la composition édulcorante pour produits alimentaires conforme à l'invention comprend de 5 à 100% en poids d'iditol par rapport à la matière sèche totale.

Les produits alimentaires conformes à l'invention sont caractérisés par le fait qu'ils comprennent la composition édulcorante selon l'invention.

Parmi ces produits alimentaires, on citera non seulement les chewing-gums mais également les fondants, les fourrages gras ou non, les gommes, les articles gélifiés ou équivalents.

La composition édulcorante conforme à l'invention est particulièrement stable au stockage et possède des propriétés anticristallisantes intéressantes à l'égard des hydrates de carbone employés comme agents sucrants et/ou de charge dans des compositions alimentaires.

Ces propriétés permettent de stabiliser la dureté du produit alimentaire dans lequel la composition est mise en oeuvre, ce qui est particulièrement avantageux lorsque le produit alimentaire est un chewing-gum.

Dans le cadre de son application aux chewing-gums, les propriétés plastifiantes et liantes de la composition conforme à l'invention sont également intéressantes compte tenu du fait que de nombreux ingrédients doivent être mélangés de manière homogène lors de leur préparation.

Par ailleurs, ladite composition permet la substitution d'une partie des produits pulvérulents ou liquides coûteux employés comme agent de charge.

En tout état de cause, elle remplace avantageusement les compositions connues à base d'hydrates de carbone pulvérulents ou de sirops d'hydrates de carbone.

On peut également souligner ses effets stabilisants et anticristallisants qui confèrent aux chewing-gums une qualité constante au vieillissement, même dans des conditions de stockage sévères notamment sur le plan de l'humidité relative.

Selon un mode de réalisation avantageux de l'invention, la composition édulcorante comprend de 5 à 80%, de préférence de 7 à 60%, et en particulier de 10 à 40% en poids d'iditol par rapport à la matière sèche totale.

La composition conforme à l'invention peut comprendre en outre au moins un polyol autre que l'iditol. Ce ou ces polyols sont choisis dans le groupe constitué par le thréitol, l'érythritol, le xylitol, l'arabitol, le ribitol, le sorbitol, le mannitol, le maltitol, le maltotriitol, le maltotétraitol, le lactitol, l'isomaltulose hydrogéné, la glycérine, les hydrolysats d'amidon hydrogénés, le sorbitol étant préféré.

Parmi les hydrolysats d'amidon hydrogénés utilisables dans le cadre de la présente invention, on peut citer ceux commercialisés par la Société Demanderesse sous la marque LYCASIN^{R} et ceux décrits, par exemple, dans les documents FR-A-2.654.308 et FR-A-2.459.002.

La composition conforme à l'invention peut comprendre en outre au moins un édulcorant intense de synthèse tel que l'aspartame ou équivalent.

La composition conforme à l'invention, ainsi obtenue, peut se présenter sous forme de poudre ou de sirops.

Pour préparer la composition conforme à l'invention, on peut mélanger le ou les hydrates de carbone à l'état de poudre avec l'iditol à l'état de poudre. On peut aussi mélanger le ou les hydrates de carbone à l'état de poudre, respectivement en solution, avec l'iditol en solution, respectivement à l'état de poudre, puis évaporer l'eau contenue dans le mélange ainsi préparé jusqu'à atteindre une teneur en eau telle que le mélange résultant est manipulable, même à température ambiante, et présente une viscosité compatible avec la mise en oeuvre de l'évaporation de manière aisée au moyen d'équipements conventionnels.

L'invention concerne encore un produit alimentaire renfermant la composition qui vient d'être décrite.

Selon un mode de réalisation particulier, le produit alimentaire conforme à l'invention est constitué par un chewing-gum sans sucre comprenant de 0,5 à 85% en poids par rapport à sa matière sèche totale d'une composition conforme à l'invention.

En particulier, l'invention concerne un chewing-gum comprenant :
a) de 15 à 60% de gomme de base,
b) de 0,5 à 80% d'au moins un polyol,
c) de 0 à 10% d'un sirop de maltitol,
d) de 0 à 10% d'un agent plastifiant choisi dans le groupe constitué par la glycérine, le propylène-glycol et leurs mélanges,
dans lequel 0,5 à 30%, de préférence 2 à 25% du polyol est l'iditol.

Selon un mode de réalisation avantageux, le polyol du chewing-gum conforme à l'invention est le sorbitol.

D'autres caractéristiques et avantages de la description apparaîtront clairement à la lecture des exemples non limitatifs suivants et relatifs à des chewing-gums et à d'autres produits alimentaires.

### EXEMPLE 1

### Chewing-gum sans sucre

On a préparé 100 g de chewing-gum dont les constituants sont les suivants:
- gomme base DREYCO BASE commercialisée par la Société DREYFUS : 25,0 g
- sorbitol poudre commercialisé par la Société ROQUETTE FRERES : 58,5 g
- mannitol 60 commercialisé par la Société ROQUETTE FRERES : 5,0 g
- glycérine commercialisée par la Société DOW CHEMICAL : 10,0 g
- arôme menthe : 1,5 g

Le procédé de fabrication du chewing-gum comporte les étapes suivantes :
- ramollissement de la gomme base à 50°C,
- introduction de la gomme base dans un pétrin à double enveloppe, dans laquelle circule de l'eau à 50°C, et équipé d'un bras malaxeur en forme générale de Z du type de celui commercialisé par la Société KUSTNER FRERES,
- introduction de 1/3 du sorbitol poudre,
- mélange pendant 2 minutes,
- introduction de 1/3 du sorbitol poudre et de la moitié de la glycérine,
- mélange pendant 2 minutes,
- introduction du sorbitol poudre restant et de l'autre moitié de la glycérine,
- mélange pendant 2 minutes,
- introduction de l'arôme menthe,
- mélange pendant 1 minute supplémentaire,
- mise en forme du chewing-gum par laminage de manière à obtenir des plaquettes de 5 mm d'épaisseur.

Cinq chewing-gums ont été fabriqués selon les conditions mentionnées ci-dessus, en mettant en oeuvre dans la formule mentionnée ci-dessus :
. du sorbitol poudre (sorbitol A) commercialisé par la société demanderesse sous le nom NEOSORB^{R} P60W (chewing-gum 1)
et en substituant, dans la formule mentionnée ci-dessus, la fraction sorbitol poudre par les compositions suivantes :
. 98% de sorbitol A+2% d'iditol (chewing-gum 2 conforme à l'invention)
. 98% de sorbitol A+2% de xylitol (chewing-gum 3)
. 80% de sorbitol A+20% d'iditol (chewing-gum 4 conforme à l'invention)
. 80% de sorbitol A+20% de xylitol (chewing-gum 5)

Il est alors procédé à l'évaluation de la dureté (en Newtons, N) des chewing-gums à l'aide d'un dispositif INSTRON type 4502.

Les mesures de dureté ont été effectuées sur les plaquettes de chewing-gums de 5 mm d'épaisseur, d'une part au cours de leur refroidissement à trois températures successives (45°C, 35°C et 20°C) et, d'autre part, à trois moments lors de leur stockage à 20°C dans une ambiance à 66% d'humidité relative (c'est-à-dire après 1 jour, 8 jours et 15 jours de stockage).

Les résultats sont réunis dans le tableau qui suit.

| Chewing-gum | Dureté (N) au cours du refroidissement | | | Dureté (N) pendant le stockage | | |
|---|---|---|---|---|---|---|
| | 45°C | 35°C | 20°C | 1 jour | 8 jours | 15 jours |
| 1 | 4,70 | 9,40 | 30,85 | 49,30 | 70,00 | 57,00 |
| 2 | 4,00 | 8,00 | 23,90 | 40,40 | 47,50 | 48,60 |
| 3 | 4,80 | 11,00 | 37,70 | 54,30 | 63,80 | 64,67 |
| 4 | 1,21 | 4,14 | 9,81 | 26,00 | 34,00 | 33,00 |
| 5 | 2,12 | 4,27 | 16,77 | 32,00 | 41,20 | 43,20 |

L'iditol a un pouvoir anticristallisant supérieur au xylitol.

L'incorporation de faibles doses d'iditol dans le sorbitol poudre (chewing-gums 2 et 4) permet de réduire considérablement le durcissement du chewing-gum au cours de la fabrication et du stockage.

### EXEMPLE 2

On a préparé 200 g de chewing-gum selon les formules suivantes :
- Gomme de base Valencia T - PL commercialisée par la société CAFOSA Gum S/A (Barcelone - Espagne): 30,0 %
- Sorbitol poudre commercialisé par la société Roquette Frères: 48,8 %
- Mannitol 60 commercialisé par la société Roquette Frères: 5,0 %
- Sirop de maltitol LYCASIN® 80/55 à 85 % matières sèches, commercialisé par la société Roquette Frères : 13,0 %
- Glycérine commercialisée par la société Dow Chemical : 1 %
- Arôme naturel Menthe liquide commercialisé par la société Silesia : 1,8 %
- Arôme naturel menthe en poudre commercialisé par
la société Silésia : 0,4 %

Le procédé de fabrication du chewing-gum comporte les étapes suivantes :
- Ramollissement de la gomme de base à 50°C
- Introduction de la gomme de base dans un pétrin à double enveloppe, dans laquelle circule de l'eau à 50°C et équipé de 2 axes malaxeurs munis de pales du type de celui commercialisé par la société Ika
- Introduction de la moitié du sorbitol poudre
- Mélange pendant 2 minutes
- Introduction de la moitié du LYCASIN® 80/55 préalablement chauffé à 50°C
- Mélange pendant 3 minutes
- Introduction du mannitol 60
- Mélange pendant 2 minutes
- Introduction de la moitié du sorbitol poudre et de la glycérine
- Mélange pendant 5 minutes
- Introduction de la moitié du LYCASIN® 80/55 à 50°C
- Mélange pendant 2 minutes
- Introduction de l'arôme menthe en poudre
- Mélange pendant 2 minutes
- Introduction de l'arôme menthe liquide
- Mélange pendant 2 minutes
- Déchargement du pétrin
- Mise en forme du chewing-gum par laminage de manière à obtenir des tablettes de 5 mm d'épaisseur.

Cinq chewing-gums ont été fabriqués selon les conditions mentionnées ci-dessus en mettant en oeuvre dans la formule mentionnée ci dessus :
- du sorbitol poudre commercialisé par la société demanderesse sous le nom NEOSORB® P60W (chewing-gum 1)
et en substituant, dans la formule mentionnée ci-dessus, la fraction sorbitol poudre par les compositions suivantes :
- 95 % de NEOSORB® P60 W + 5 % d'iditol (chewing-gum 2 conforme à l'invention)
- 95 % de NEOSORB® P60W + 5 % de xylitol (chewing-gum 3)
- 90 % NEOSORB® P60W + 10 % d'Iditol (chewing-gum 4 conforme à l'invention)
- 90 % NEOSORB® P60W + 10 % xylitol (chewing-gum 5)

Il est alors procédé à l'évaluation de la dureté (en Newtons, N) des chewing-gums à l'aide d'un dispositif Instron type 4502.

Les mesures de dureté ont été effectuées sur les plaquettes de chewing-gums de 5 mm d'épaisseur, d'une part au cours de leur refroidissement à trois températures successives (45°C, 35°C et 20°C) et, d'autre part, à trois moments lors de leur stockage à 20°C dans une ambiance à 50 % d'humidité relative (c'est-à-dire après 1 jour, 8 jours et 15 jours de stockage).

Les résultats sont réunis dans le tableau qui suit.

| **Chewing-gum** | **Dureté (N) au cours du refroidissement** | | | **Dureté (N) pendant le stockage** | | |
|---|---|---|---|---|---|---|
| | **45°C** | **35°C** | **20°C** | **1 jour** | **8 jours** | **15 jours** |
| 1 | 2,8 | 4,8 | 14,7 | 15,4 | 15,5 | 16,5 |
| 2 | 2,4 | 4,0 | 11,3 | 12,6 | 12,7 | 13,0 |
| 3 | 2,8 | 5,6 | 17,9 | 16,9 | 17,1 | 17,5 |
| 4 | 0,7 | 2,1 | 4,7 | 8,1 | 8,3 | 8,3 |
| 5 | 1,2 | 2,5 | 8,0 | 10,0 | 11,8 | 12,5 |

L'iditol a un pouvoir anticristallisant supérieur au xylitol.

L'incorporation de faibles doses d'iditol dans le sorbitol poudre (chewing-gums 2 et 4) permet de réduire considérablement le durcissement du chewing-gum au cours de la fabrication et du stockage.

### EXEMPLE 3

### Gommes dures sans sucre

On prépare plusieurs gommes dures sans sucre à base de xylitol ou de sorbitol (essais témoins) et d'iditol en mettant en oeuvre la recette indiquée dans le tableau qui suit.

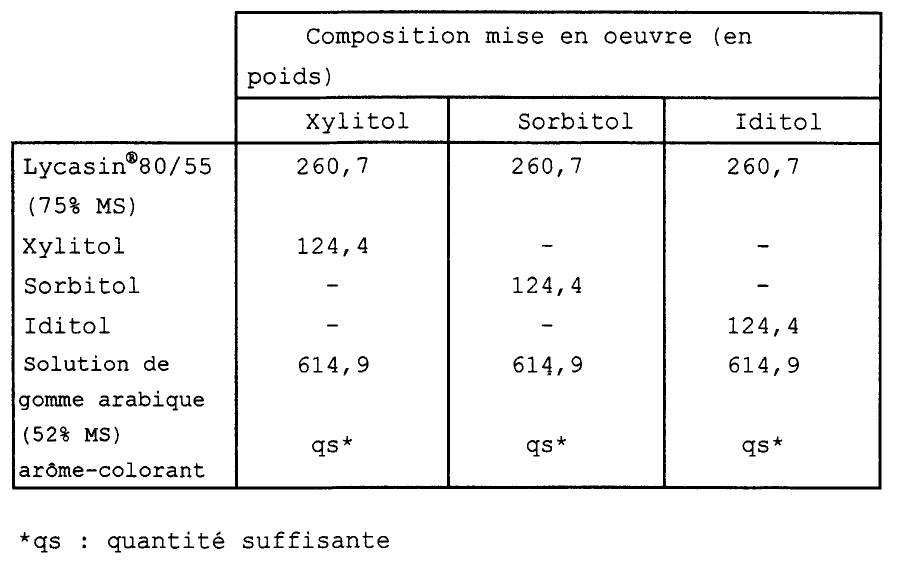

Le LYCASIN^{R} 80/55 est un sirop de maltitol commercialisé par la société demanderesse.

Le xylitol utilisé peut être, par exemple, celui commercialisé par la société demanderesse sous la marque XYLISORB^{R} 700.

Le sorbitol utilisé peut être, par exemple, celui commercialisé par la société demanderesse sous la marque NEOSORB^{R} P60W.

Le mode opératoire pour préparer de telles gommes dures sans sucre consiste, successivement, à :
- cuire les mélanges LYCASIN^{R} 80/55-iditol, LYCASIN^{R} 80/55-xylitol et LYCASIN^{R} 80/55-sorbitol à 150°C sous pression atmosphérique;
- refroidir à 110°C;
- ajouter la solution de gomme arabique, le colorant et l'arôme;
- couler dans des empreintes d'amidon;
- étuver à 35°C pendant deux jours puis à 40°C pendant environ six jours jusqu'à l'obtention d'un brix final de 89.

Les compositions des gommes sans sucre ainsi obtenues sont rassemblées dans le tableau qui suit.

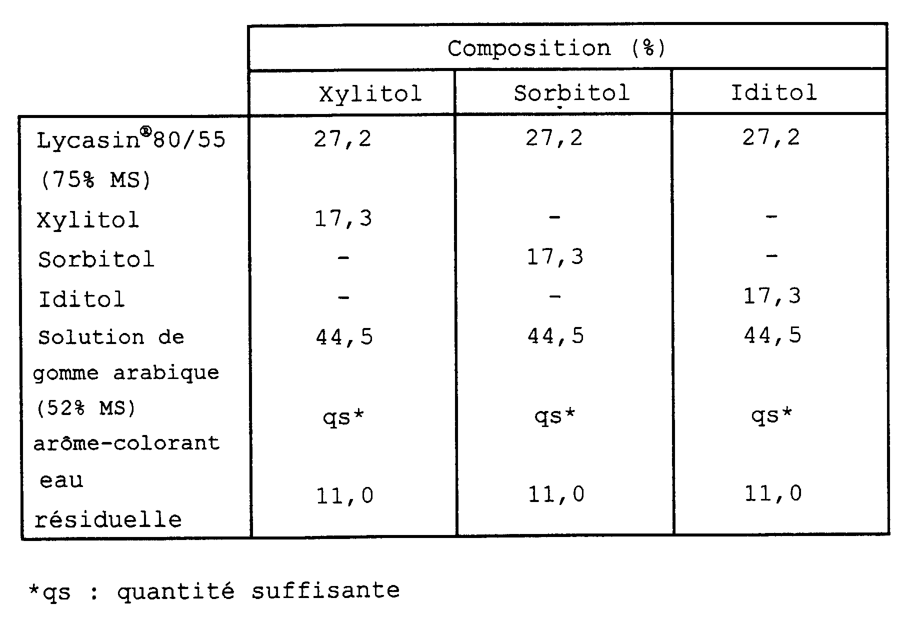

Des tests de stabilité sont réalisés en mettant les gommes dures sans sucre en microclimat à 60% d'humidité relative et à 20°C pendant 10 jours. A l'issue de cette période, les gommes dures sans sucre sont observées en notant leur stabilité, leur saveur sucrée et leur dureté. L'échelle de notation est la suivante :
+ : faible
++ : important
+++ : très important
Les résultats des tests de stabilité obtenus pour les gommes dures sans sucre sont rassemblés dans le tableau qui suit.

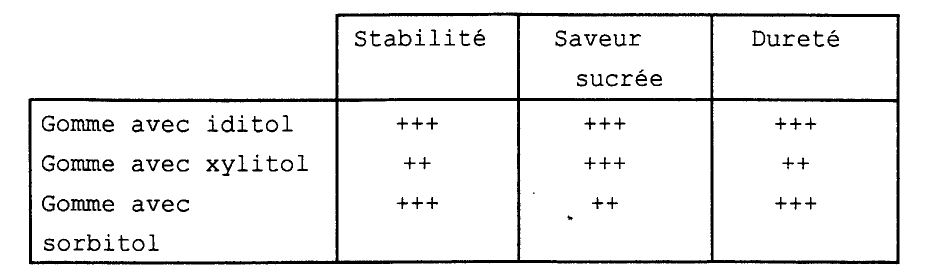

## Revendications

1. Composition édulcorante caractérisée par le fait qu'elle comprend de 5 à 100% en poids d'iditol par rapport à la matière sèche totale.

2. Composition selon la revendication 1, caractérisée par le fait qu'elle comprend au moins un polyol autre que l'iditol.

3. Composition selon la revendication 2, caractérisée par le fait que ledit polyol est choisi dans le groupe constitué par le thréitol, l'érythritol, le xylitol, l'arabitol, le ribitol, le sorbitol, le mannitol, le maltitol, le maltotriitol, le maltotétraitol, le lactitol, l'isomaltulose hydrogéné, la glycérine, les hydrolysats d'amidon hydrogénés, le sorbitol étant préféré.

4. Composition selon l'une quelconque des revendications 1 à 3, caractérisée par le fait qu'elle est sous forme de poudre.

5. Composition selon l'une quelconque des revendications 1 à 3, caractérisée par le fait qu'elle est sous forme de sirop.

6. Produit alimentaire caractérisé par le fait qu'il comprend une composition selon l'une quelconque des revendications 1 à 5.

7. Produit alimentaire selon la revendication 6, caractérisé par le fait qu'il est constitué par un chewing-gum sans sucre comprenant de 5 à 85% en poids par rapport à sa matière sèche totale d'une composition selon l'une quelconque des revendications 1 à 5.

8. Chewing-gum comprenant :
a) de 15 à 60% de gomme de base,
b) de 0,5 à 80% d'au moins un polyol,
c) de 0 à 10% d'un sirop de maltitol,
d) de, 0 à 10% d'un agent plastifiant choisi dans le groupe constitué par la glycérine, le propylène-glycol et leurs mélanges, caractérisé par le fait que 0,5 à 30% du polyol est l'iditol.

9. Chewing-gum selon la revendication 8, caractérisé par le fait que le polyol est le sorbitol.

10. Chewing-gum selon la revendication 8 ou 9, caractérisé par le fait que 2 à 25% du polyol est l'iditol.
